# EUROPÄISCHE PATENTSCHRIFT

(11) **EP 3 861 413 B1**
(45) Veröffentlichungstag und Bekanntmachung des Hinweises auf die Patenterteilung: **03.05.2023**
(21) Anmeldenummer: 19765696.0
(22) Anmeldetag: 05.09.2019
(51) Int. Cl.: G05B 19/418, H04L 67/306, H04L 67/565

(54) **VERFAHREN ZUM ETABLIEREN EINER NETZWERKKOMMUNIKATION MITTELS OPC UA**
METHOD FOR ESTABLISHING NETWORK COMMUNICATION BY MEANS OF OPC UA
PROCÉDÉ POUR ÉTABLIR UNE COMMUNICATION DE RÉSEAU PAR OPC UA

(30) Priorität: 01.10.2018 DE 102018124184
(43) Veröffentlichungstag der Anmeldung: 11.08.2021
(60) Teilanmeldung: 23159009.2
(73) Patentinhaber: Endress+Hauser Process Solutions AG, 4153 Reinach (CH)
(72) Erfinder: SPOHN, Hermann, 79591 Eimeldingen (DE); ZUBLER, Tobias, 79725 Laufenburg (DE); SCHIAVI, Emilio, 4104 Oberwil (CH)
(74) Vertreter: Trenkle, Dennis
(86) Internationale Anmeldenummer: PCT/EP2019/073750
(87) Internationale Veröffentlichungsnummer: WO 2020/069816

(56) Entgegenhaltungen:
- DE-A1-102010 029 952
- US-A1- 2018 088 548
- GHAZIVAKILI MOHAMMAD ET AL: "Industrial data-collector by enabling OPC-UA standard for Industry 4.0", 2018 14TH IEEE INTERNATIONAL WORKSHOP ON FACTORY COMMUNICATION SYSTEMS (WFCS), IEEE, 13. Juni 2018 (2018-06-13), Seiten 1-8, XP033369584, DOI: 10.1109/WFCS.2018.8402364 [gefunden am 2018-07-03]
- "IEC TR 62541-1 ED3: OPC unified architecture - Part 1: Overview and concepts", 65E/605/CD, IEC, 3, RUE DE VAREMBÉ, PO BOX 131, CH-1211 GENEVA 20, SWITZERLAND , 29. Juni 2018 (2018-06-29), Seiten 1-27, XP082014625, Gefunden im Internet: URL:http://www.iec.ch/cgi-bin/restricted/g etfile.pl/65E_605e_CD.pdf?dir=65E&format=p df&type=_CD&file=605e.pdf [gefunden am 2018-06-29]

## Beschreibung

Die Erfindung betrifft ein Verfahren zum benutzerspezifischen Erlangen von Informationen, welche auf einer cloudfähigen Datenbank gespeichert sind, wobei die Informationen auf der Datenbank als unterschiedliche Informationstypen und/oder in unterschiedlichen Datenformaten vorliegen, wobei der Benutzer über einen OPC UA-Client verfügt, welcher mit einem OPC UA-Server in Kommunikationsverbindung steht, wobei der OPC UA-Server über ein Konfigurationsmodul verfügt, welches Konfigurationsmodul zum Erstellen, Aggregieren und Anpassen von Informationsmodellen ausgestaltet ist, wobei der OPC UA-Server mit einer Schnittstelle zur Anwendungsprogrammierung der Datenbank interagiert, welche Schnittstelle zur Anwendungsprogrammierung Anforderungen und Befehle zum Zugriff auf die Datenbank definiert

Aus dem Stand der Technik sind Server-Client-Systeme bekannt, welche den OPC UA ("Open Platforms Communication Unified Architecture")-Standard nutzen. Dieser Standard umfasst ein industrielles Machine-to-Machine-Protokoll, welches plattformunabhängig nutzbar ist. Ein diesen Standard nutzender OPC UA-Server stellt hierbei Daten als strukturierte Informationen bereit, welche von einem diesen Standard nutzenden OPC UA-Client abgefragt und in Anwendungen verschiedenster Art verwendet werden können.

Im Zuge der Schlagworte "Industrial Internet of Things (IIoT)" und "Industrie 4.0" werden vermehrt Daten aus industriellen Anlagen auf sogenannten cloudfähigen Datenbanken gespeichert. Als cloudfähige Datenbank wird eine Datenbank verstanden, welche kompatibel zur Cloud-Computing-Technologie ist. Unter Cloud Computing wird in diesem Fall das Speichern von Informationen und das Zugreifen auf die gespeicherten Informationen über das Internet verstanden.

Zum Zugriff auf eine solche Datenbank und zum Austausch der Daten werden sogenannte Schnittstellen zur Anwendungsprogrammierung (engl.: "Application Programm Interface", kurz "API") verwendet. Diese definieren die erlaubten Befehle und Zugriffsarten auf eine Datenbank. Vor dem Zugriff kann die API eine Authentifikation des Benutzers verlangen. Diese Authentifikation wird üblicherweise über einen Schlüssel (einen sogenannten "API key") realisiert.

Nach heutigem Stand existiert keine einfache Möglichkeit, mittels welcher ein Benutzer Daten der Cloud granuliert über ein OPC UA-System abrufen kann.

Die DE 10 2010 029952 A1 offenbart ein Verfahren, bei welchem Informationen eines digitalen Zwillings eines Feldgeräts per OPC UA auf ein neu in einer Anlage zu integrierendes Feldgerät übertragen werden.

Die Veröffentlichung GHAZIVAKILI MOHAMMAD ET AL: "Industrial data-collector by enabling OPC-UA standard for Industry 4.0", 2018 14TH IEEE INTERNATIONAL WORKSHOP ON FACTORY COMMUNICATION SYSTEMS (WFCS), IEEE, 13. Juni 2018 (2018-06-13), Seiten 1-8, XP033369584, DOI: 10.1109/WFCS.2018.8402364 offenbart ein "Distributed Industrial IoT Gateway", das die Kommunikation von der Feldgeräteebene bis zur Cloud Datenbank über OPC UA ermöglicht.

Die US 2018/088548 A1 offenbart ein Verfahren zur Prozesssteuerung von Anlagen und Anlagenleitsystemen in einem OPC UA basierten Machine-to-Machine Netzwerk. Die Veröffentlichung "IEC TR 62541-1 ED3: OPC unified architecture - Part 1: Overview and concepts", 65E/605/CD, IEC, 3, RUE DE VAREMBÜ, PO BOX 131, CH-1211 GENEVA 20, SWITZERLAND, 29. Juni 2018 (2018-06-29), Seiten 1-27, XP082014625 offenbart eine OPC UA-basierte Architektur mit einem Kollektor, der in der Lage ist, Daten aus dem Betrieb zu sammeln und sie in den OPC UA-Standard zu konvertieren, um eine agile und effektive vertikale Integration in einer Industrie 4.0-Umgebung zu ermöglichen.

Ausgehend von dieser Problematik liegt der Erfindung liegt die Aufgabe zugrunde, ein Verfahren vorzustellen, welches es erlaubt, Daten einer cloudfähigen Datenbank über ein OPC UA-System sicher abzurufen.

Die Aufgabe wird durch ein Verfahren gemäß Anspruch 1 gelöst.

Der Vorteil des erfindungsgemäßen Verfahrens besteht darin, dass einem Benutzer strukturierte, vom Benutzer definierte Informationen aus einer cloudbasierten Datenbank über sein OPC UA-System zur Verfügung gestellt werden kann. Der OPC UA-Server kommuniziert über die Schnittstelle zur Anwendungsprogrammierung mit der Datenbank. Ein bereitgestelltes Informationsmodell informiert den OPC UA-Server, welche Informationen er aus der Cloud abfragen soll. Diese abgefragten Informationen werden anschließend in strukturierten Informationsmodellen (Strukturdaten) standardisiert im OPC UA-Format bereitgestellt. Der Benutzer verbindet sich über seinen OPC UA-Client mit dem OPC UA-Server und kann die für ihn bereitgestellten Strukturdaten abrufen.

Es kann vorgesehen sein, dass der OPC UA-Server mehrere verschiedene Schnittstellen zur Anwendungsprogrammierung aufweist, wobei eine solche Schnittstelle zur Anwendungsprogrammierung die Kommunikation mit einer oder mehreren Datenbanken ermöglicht.

Bei der cloudfähigen Datenbank kann es sich um eine Datenbank beliebigen Typs handeln, auf welcher Informationen beliebigen Typs gespeichert sein können.

Gemäß einer bevorzugten Weiterbildung des erfindungsgemäßen Verfahrens ist vorgesehen, dass im Zuge des Erstellens des benutzerspezifischen Informationsmoduls die Verfügbarkeit von zumindest einer der abzufragenden Informationen auf der Datenbank mittels einer Ping-Anfrage an die Datenbank überprüft wird. Nachdem eine der abzufragenden Informationen definiert ist, wird ein Anfrage-Telegramm über die Schnittstelle zur Anwendungsprogrammierung gesendet, welche die anzufragende Information betrifft. Im Falle, dass die Datenbank Informationen des passenden Typs aufweist, wird ein positives Antwort-Telegramm von der Datenbank ausgesendet. Im Falle, dass keine Informationen passenden Typs auf der Datenbank gespeichert sind, wird ein negatives Antwort-Telegramm, oder kein Antwort-Telegramm, von der Datenbank ausgesendet.

Gemäß einer vorteilhaften Ausgestaltung des erfindungsgemäßen Verfahrens ist vorgesehen, dass die abzufragenden Informationen als Knoten gemäß der OPC UA Spezifikation NodeSet 2.0 im benutzerspezifischen Informationsmodell zusammengestellt werden.

Gemäß einer bevorzugten Ausgestaltung des erfindungsgemäßen Verfahrens ist vorgesehen, dass das benutzerspezifische Informationsmodell in einem Tabellenkalkulations-Dateiformat erstellt wird. Beispielsweise liegt das spezifische Informationsmodell in einem Excel-Dateiformat vor.

Gemäß einer vorteilhaften Ausgestaltung des erfindungsgemäßen Verfahrens ist vorgesehen, dass es sich bei den auf der Datenbank gespeicherten Informationen um Informationen, welche von Komponenten einer Anlage der Automatisierungstechnik erstellt werden, handelt. Es handelt sich hierbei um eine Anlage aus der Fertigungsautomatisierung oder aus der Prozessautomatisierung, in welcher automatisiert zumindest ein Produkt vorbestimmter Qualität und Quantität aus zumindest einem Edukt produziert wird.

Alternativ könne auf der Datenbank beliebige Informationen beliebigen Typs gespeichert werden, beispielsweise Wetterdaten, Inventardaten, etc.

Gemäß einer bevorzugten Ausgestaltung des erfindungsgemäßen Verfahrens ist vorgesehen, dass es sich bei den Komponenten um Feldgeräte handelt und wobei es sich bei den Informationen um zumindest Informationen aus zumindest einer der folgenden Kategorie handelt:
- Von den Feldgeräten erhobene Prozesswerte;
- Status-, bzw. Diagnoseinformationen der Feldgeräte;
- Informationen bezüglich des geographischen Standorts der Feldgeräte
- Geräteidentifikationen der Feldgeräte;
- Bestellstatus der Feldgeräte bei dem jeweiligen Gerätehersteller.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

Erfindungsgemäß ist es vorgesehen, dass vor dem Abfragen der im benutzerspezifischen Informationsmodell definierten Informationen aus der Datenbank ein Schlüssel an die Schnittstelle zur Anwendungsprogrammierung mittels des OPC UA-Servers gesendet und auf Gültigkeit überprüft wird und wobei die im benutzerspezifischen Informationsmodell definierten Informationen nur dann abgefragt werden, falls die Gültigkeit des Schlüssels erfolgreich überprüft werden kann.

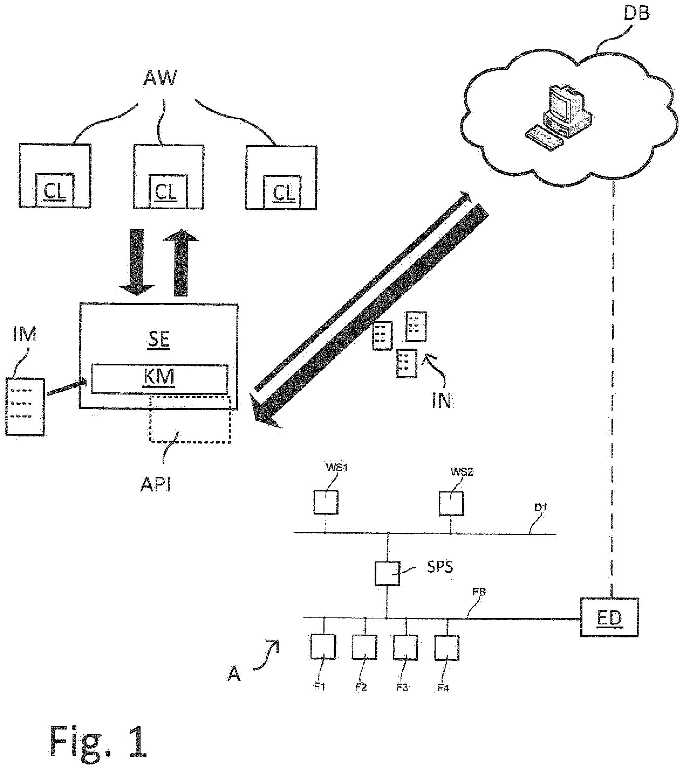

Die Erfindung wird anhand der nachfolgenden Figuren näher erläutert. Es zeigt
- Fig. 1:: ein Ausführungsbeispiel des erfindungsgemäßen Verfahrens.

Gezeigt ist ein OPC UA-System, bestehend aus einem OPC UA-Server SE (im Folgenden als "Server" bezeichnet) und mehreren OPC UA-Clients CL (im Folgenden als "Client" bezeichnet), welche mittels eines TCP/IP-Netzwerks in Kommunikationsverbindung stehen. Die Clients CL sind seitens eines Benutzers angeordnet und sind jeweils Teil von benutzerspezifischen Anwendungen AW. Bei diesen Anwendungen handelt es sich beispielsweise um eine Datenbank des Benutzers, um eine oder mehrere Anwendungsapplikationen, insbesondere ausgestaltet zur Verarbeitung von Informationen und/oder um eine Mensch-Maschine-Schnittstelle (HMI) oder um ein SCADA-System.

Der Benutzer ist Betreiber einer Anlage A der Automatisierungstechnik. In einer solchen modernen Anlage A sind Feldgeräte F1, F2, F3, F4 in der Regel über Kommunikationsnetzwerke wie beispielsweise Feldbusse FB (Profibus^{®}, Foundation^{®} Fieldbus, HART^{®}, etc.) mit übergeordneten Einheiten SPS verbunden. Bei den übergeordneten Einheiten handelt es sich um Steuereinheiten, wie beispielsweise eine speicherprogrammierbare Steuerung oder einen PLC (Programmable Logic Controller). Die übergeordneten Einheiten SPS dienen unter anderem zur Prozesssteuerung, sowie zur Inbetriebnahme der Feldgeräte F1, F2, F3, F4. Die von den Feldgeräten F1, F2, F3, F4, insbesondere von Sensoren, erfassten Messwerte werden über den jeweiligen Feldbus FB an eine (oder gegebenenfalls mehrere) übergeordnete Einheit(en) SPS übermittelt, die die Messwerte gegebenenfalls weiterverarbeiten und über ein Datennetzwerk D1 an den Leitstand, bestehend aus mehreren Workstation-PCS WS1, WS2, der Anlage A weiterleiten. Der Leitstand dient zur Prozessvisualisierung, Prozessüberwachung und Prozessteuerung über die übergeordneten Einheiten SPS. Daneben ist auch eine Datenübertragung von der übergeordneten Einheit SPS über den Feldbus FB an die Feldgeräte F1, F2, F3, F4 erforderlich, insbesondere zur Konfiguration und Parametrierung von Feldgeräten F1, F2, F3, F4 sowie zur Ansteuerung von Aktoren.

Darüber hinaus ist an den Feldbus FB ein sogenanntes Edge Device ED angeschlossen. Das Edge Device ED ist dazu ausgestaltet, die über den Feldbus FB übertragenen Informationen, welche die Feldgeräte F1, F2, F3, F4 mitzuhören, ggf. zu verarbeiten und über das Internet an eine cloudfähige Datenbank DB zu übermitteln. Die Datenbank DB speichert diese Informationen neben weiteren feldgeräterelevanten Informationen. Beispiele für auf der Datenbank gespeicherte feldgeräterelevante Informationen sind beispielsweise:
- Von den Feldgeräten F1, F2, F3, F4 erhobene Prozesswerte;
- Status-, bzw. Diagnoseinformationen der Feldgeräte F1, F2, F3, F4;
- Informationen bezüglich des geographischen Standorts der Feldgeräte F1, F2, F3, F4;
- Geräteidentifikationen der Feldgeräte F1, F2, F3, F4, beispielsweise deren Seriennummer, deren Hersteller, oder deren Bestellcode;
- Bestellstatus der Feldgeräte bei dem jeweiligen Gerätehersteller,
sowie aus diesen Informationen errechnete Zusatzinformationen, welche insbesondere von auf der Datenbank DB ausgeführten Anwendungsapplikationen berechnet werden.

Damit der Benutzer die Informationen, welche auf der Datenbank DB gespeichert sind, auf seinem OPC UA-System nutzen kann, müssen diese OPC UA-konform von der Datenbank DB abgerufen werden. Der Server SE weist hierfür ein Konfigurationsmodul KM auf, in welches ein oder mehrere benutzerspezifische Informationsmodelle IM ladbar sind. Ein solches Informationsmodell IM liegt typischerweise in einem Tabellenkalkulations-Dateiformat vor und definiert, welche Informationen IN durch den Server SE von der Datenbank DB abgefragt werden sollen. Die Verbindung des Servers SE zu der Datenbank DB wird durch eine Schnittstelle zur Anwendungsprogrammierung geregelt, welche den Zugriff und die erlaubten Bedientelegramme auf, bzw. für die Datenbank DB definiert.

Nach Authentifizierung des Benutzers gegenüber der Datenbank DB arbeitet der Server SE das Informationsmodell sukzessive ab und erhält die in diesem definierten Informationen von der Datenbank DB. Das Informationsmodell IN wird mit den abgerufenen Informationen gefüllt und OPC UA-konform als Strukturdaten zur Verfügung gestellt. Diese Strukturdaten können anschließend von den Clients CL abgerufen werden und weiterverarbeitet werden, bzw. mittels den Anwendungen IG genutzt werden.

Das in Fig. 1 gezeigte Verfahren ist beispielhaft zu verstehen. Neben der beschriebenen Datenbank, welche Informationen über eine Anlage A der Automatisierungstechnik enthält, können beliebige Datenbanken mit beliebigen Informationstypen verwendet werden.

### Bezugszeichenliste

- A: Anlage der Automatisierungstechnik
- API: Schnittstelle zur Anwendungsprogrammierung
- CL: OPC UA-Client
- D1: Datennetzwerk
- DB: Datenbank
- ED: Edge Device
- F1, F2, F3, F4: Feldgeräte
- FB: Feldbus
- AW: Anwendungen des Benutzers (OPC UA-Client)
- IN: Informationen
- IM: benutzerspezifisches Informationsmodell
- KM: Konfigurationsmodul
- SE: OPC UA-Server
- SPS: übergeordnete Einheit
- WS1, WS2: Workstation-PC

## Patentansprüche

1. Verfahren zum benutzerspezifischen Erlangen von Informationen (IN), welche auf einer cloudfähigen Datenbank (DB) gespeichert sind, wobei die Informationen (IN) auf der Datenbank (DB) als unterschiedliche Informationstypen und/oder in unterschiedlichen Datenformaten vorliegen, wobei der Benutzer über einen OPC UA-Client verfügt (CL), welcher mit einem OPC UA-Server (SE) in Kommunikationsverbindung steht, wobei der OPC UA-Server (SE) über ein Konfigurationsmodul (KM) verfügt, welches Konfigurationsmodul (KM) zum Erstellen, Aggregieren und Anpassen von Informationsmodellen ausgestaltet ist, wobei der OPC UA-Server (SE) mit einer Schnittstelle zur Anwendungsprogrammierung (API) der Datenbank (DB) interagiert, welche Schnittstelle zur Anwendungsprogrammierung (API) Anforderungen und Befehle zum Zugriff auf die Datenbank (DB) definiert, umfassend:
- Erstellen und Laden eines benutzerspezifischen Informationsmodells (IM) auf den OPC UA-Server (SE) mittels des Konfigurationsmoduls (KM), wobei das benutzerspezifische Informationsmodell (IM) zumindest eine Information (IN) oder eine Vielzahl von Informationen (IN) definiert, welche von der Datenbank (DB) abgefragt werden sollen;
- Abfragen der im benutzerspezifischen Informationsmodell (IM) definierten Informationen (IN) von der Datenbank (DB) mittels der Schnittstelle zur Anwendungsprogrammierung (API) und Übergeben der Informationen (IN) von der Schnittstelle zur Anwendungsprogrammierung (API) an den OPC UA-Server (SE);
- Konvertieren der abgefragten Informationen (IN) in OPC UA-konforme Strukturdaten; und
- Übermitteln der Strukturdaten von dem OPC UA-Server (SE) an den OPC UA-Client (CL),
**dadurch gekennzeichnet,**
**dass** vor dem Abfragen der im benutzerspezifischen Informationsmodell (IM) definierten Informationen (IN) aus der Datenbank (DB) ein Schlüssel an die Schnittstelle zur Anwendungsprogrammierung (API) mittels des OPC UA-Servers (SE) gesendet und auf Gültigkeit überprüft wird und wobei die im benutzerspezifischen Informationsmodell (IM) definierten Informationen (IN) nur dann abgefragt werden, falls die Gültigkeit des Schlüssels erfolgreich überprüft werden kann.

2. Verfahren nach Anspruch 1, wobei im Zuge des Erstellens des benutzerspezifischen Informationsmoduls (IM) die Verfügbarkeit von zumindest einer der abzufragenden Informationen (IN) auf der Datenbank (DB) mittels einer Ping-Anfrage an die Datenbank (DB) überprüft wird.

3. Verfahren nach Anspruch 1 oder 2, wobei die abzufragenden Informationen (IN) als Knoten gemäß der OPC UA Spezifikation NodeSet 2.0 im benutzerspezifischen Informationsmodell (IM) zusammengestellt werden.

4. Verfahren nach zumindest einem der vorherigen Ansprüche, wobei das benutzerspezifische Informationsmodell (IM) in einem Tabellenkalkulations-Dateiformat erstellt wird.

5. Verfahren nach zumindest einem der vorherigen Ansprüche, wobei es sich bei den auf der Datenbank (DB) gespeicherten Informationen (IN) um Informationen, welche von Komponenten einer Anlage (A) der Automatisierungstechnik erstellt werden, handelt.

6. Verfahren nach Anspruch 5, wobei es sich bei den Komponenten um Feldgeräte (F1, F2, F3, F4) handelt und wobei es sich bei den Informationen (IN) um Informationen aus zumindest einer der folgenden Kategorie handelt:
- Von den Feldgeräten (F1, F2, F3, F4) erhobene Prozesswerte;
- Status-, bzw. Diagnoseinformationen der Feldgeräte (F1, F2, F3, F4);
- Informationen bezüglich des geographischen Standorts der Feldgeräte (F1, F2, F3, F4)
- Geräteidentifikationen der Feldgeräte (F1, F2, F3, F4);
- Bestellstatus der Feldgeräte (F1, F2, F3, F4) bei dem jeweiligen Gerätehersteller.

## Claims

1. Procedure for the user-specific retrieval of information (IN) that is saved in a cloud-compatible database (DB), wherein the information (IN) in the database (DB) is available as different types of information and/or in different data formats, wherein the user has an OPC UA client (CL), which has a communication connection with an OPC UA server (SE), wherein the OPC UA server (SE) has a configuration module (KM), wherein said configuration module (KM) is designed to create, aggregate and adapt information models, wherein the OPC UA server (SE) interacts with an application programming interface (API) of the database (DB), wherein said application programming interface (API) defines requirements and commands to access the database (DB), said procedure comprising:
- The creation and loading of a user-specific information model (IM) on the OPC UA server (SE) using the configuration module (KM), wherein the user-specific information model (IM) defines at least one item of information (IN) or multiple items of information (IN) that should be retrieved from the database (DB);
- The retrieval of the information (IN) defined in the user-specific information model (IM) from the database (DB) by means of the application programming interface (API) and the transmission of the information (IN) from the application programming interface (API) to the OPC UA server (SE);
- The conversion of the retrieved information (IN) to structure data that is compliant with OPC UA; and
- The transmission of structural data from the OPC UA server (SE) to the OPC UA client (CL),
**characterized in that**,
before the retrieval of the information (IN) defined in the user-specific information model (IM) from the database (DB), a key is sent to the application programming interface (API) by means of the OPC UA server (SE) and its validity is verified, and wherein the information (IN) defined in the user-specific information model (IM) is only retrieved if the validity of the key can be verified successfully.

2. Procedure as claimed in Claim 1, wherein, during the creation of the user-specific information module (IM), the availability of at least one item of information (IN) to be retrieved in the database (DB) is verified using a ping request to the database (DB).

3. Procedure as claimed in Claim 1 or 2, wherein the information (IN) to be retrieved are compiled as nodes according to the OPC UA NodeSet 2.0 specification in the user-specific information model (IM).

4. Procedure as claimed in at least one of the previous claims, wherein the user-specific information model (IM) is created in a table calculation file format.

5. Procedure as claimed in at least one of the previous claims, wherein the information (IN) saved in the database (DB) is information created by components of an installation (A) used in automation engineering.

6. Procedure as claimed in Claim 5,
wherein the components are field devices (F1, F2, F3, F4) and
wherein the information (IN) constitutes information from at least one of the following categories:
- Process values collected by the field devices (F1, F2, F3, F4);
- Status or diagnostic information of the field devices (F1, F2, F3, F4);
- Information with regard to the geographical location of the field devices (F1, F2, F3, F4)
- Device identification of the field devices (F1, F2, F3, F4);
- Order status of the field devices (F1, F2, F3, F4) at the particular device manufacturer.

## Revendications

1. Procédé destiné à l'obtention spécifique à l'utilisateur d'informations (IN), lesquelles sont mémorisées sur une base de données (DB) compatible avec le cloud, les informations (IN) étant présentes sur la base de données (DB) sous forme de différents types d'informations et/ou dans différents formats de données, l'utilisateur disposant d'un client OPC UA (CL), lequel est en liaison de communication avec un serveur OPC UA (SE), le serveur OPC UA (SE) disposant d'un module de configuration (KM), lequel module de configuration (KM) est conçu pour créer, agréger et adapter des modèles d'information, le serveur OPC UA (SE) interagissant avec une interface de programmation d'application (API) de la base de données (DB), laquelle interface de programmation d'application (API) définit des exigences et des commandes pour accéder à la base de données (DB), lequel procédé comprend :
- La création et le chargement d'un modèle d'information (IM) spécifique à l'utilisateur sur le serveur OPC UA (SE) au moyen du module de configuration (KM), le modèle d'information (IM) spécifique à l'utilisateur définissant au moins une information (IN) ou une pluralité d'informations (IN) qui doivent être interrogées par la base de données (DB) ;
- L'interrogation des informations (IN) définies dans le modèle d'information (IM) spécifique à l'utilisateur à partir de la base de données (DB) au moyen de l'interface de programmation d'application (API) et la transmission des informations (IN) de l'interface de programmation d'application (API) au serveur OPC UA (SE) ;
- La conversion des informations interrogées (IN) en données de structure conformes à OPC UA ; et
- La transmission des données de structure du serveur OPC UA (SE) au client OPC UA (CL),
**caractérisé en ce que**,
avant l'interrogation des informations (IN) définies dans le modèle d'information (IM) spécifique à l'utilisateur à partir de la base de données (DB), une clé est envoyée à l'interface de programmation d'application (API) au moyen du serveur OPC UA (SE) et sa validité est vérifiée, et les informations (IN) définies dans le modèle d'information (IM) spécifique à l'utilisateur ne sont interrogées que si la validité de la clé peut être vérifiée avec succès.

2. Procédé selon la revendication 1, pour lequel, au cours de la création du module d'information (IM) spécifique à l'utilisateur, la disponibilité d'au moins une des informations (IN) à interroger est vérifiée sur la base de données (DB) au moyen d'une requête ping à la base de données (DB).

3. Procédé selon la revendication 1 ou 2, pour lequel les informations (IN) à interroger sont rassemblées sous forme de noeuds selon la spécification OPC UA NodeSet 2.0 dans le modèle d'informations (IM) spécifique à l'utilisateur.

4. Procédé selon au moins l'une des revendications précédentes, pour lequel le modèle d'information (IM) spécifique à l'utilisateur est créé dans un format de fichier de tableur.

5. Procédé selon au moins l'une des revendications précédentes, pour lequel les informations (IN) enregistrées dans la base de données (DB) sont des informations qui sont créées par des composants d'une installation (A) de la technique d'automatisation.

6. Procédé selon la revendication 5,
pour lequel les composants sont des appareils de terrain (F1, F2, F3, F4) et
pour lequel les informations (IN) sont des informations d'au moins une des catégories suivantes :
- Valeurs process relevées par les appareils de terrain (F1, F2, F3, F4) ;
- Informations d'état ou de diagnostic des appareils de terrain (F1, F2, F3, F4) ;
- Informations relatives à l'emplacement géographique des appareils de terrain (F1, F2, F3, F4)
- Identifications des appareils de terrain (F1, F2, F3, F4) ;
- État de commande des appareils de terrain (F1, F2, F3, F4) auprès du fabricant d'appareils concerné.
